# EUROPEAN PATENT APPLICATION

(11) **EP 3 605 687 A1**
(43) Date of publication of application: **05.02.2020**
(21) Application number: 18771890.3
(22) Date of filing: 22.02.2018
(51) Int. Cl.: H01M 8/04, C01B 3/38, H01M 8/04858, H01M 8/0612

(54) **FUEL CELL SYSTEM**

(30) Priority: 21.03.2017 JP 2017054201
(71) Applicant: Panasonic Intellectual Property Management Co., Ltd., Osaka-shi, Osaka 540-6207 (JP)
(72) Inventor: NARITA Satoru, Osaka 540-6207 (JP); YASUDA Shigeki, Osaka 540-6207 (JP); YAMAGUCHI Shohei, Osaka 540-6207 (JP); KINOSHITA Hiroshi, Osaka 540-6207 (JP)
(74) Representative: Grünecker Patent- und Rechtsanwälte PartG mbB
(86) International application number: PCT/JP2018/006493
(87) International publication number: WO 2018/173620

(57) **Abstract**

A fuel cell system (100) of the present disclosure includes: a fuel cell (13) configured to generate electric power using hydrogen gas and an oxidant gas; a reformer (11) configured to generate the hydrogen gas; a combustor (15) configured to heat the reformer (11); an exhaust passage (17) for combustion exhaust gas generated in the combustor (15); a CO sensor (19) disposed in the exhaust passage (17); and a controller (32) configured to monitor a combustion state in the combustor (15) based on a detection value from the CO sensor (19). In a power generation period of the fuel cell (13), the controller (32) executes, while executing a first process for testing the CO sensor by intentionally increasing a CO concentration in the combustion exhaust gas, a second process for converging a power generation amount of the fuel cell (13) to a target value.

## Description

### TECHNICAL FIELD

The present disclosure relates to a fuel cell system.

### BACKGROUND ART

Fuel cell systems equipped with a hydrogen generator and a fuel cell are known widely. The hydrogen generator includes a reformer for generating hydrogen gas from a raw material such as city gas through a reforming reaction. The hydrogen gas generated in the reformer is supplied to the fuel cell together with oxygen (air), which acts as an oxidant gas. In the fuel cell, electric power is generated through an electrochemical reaction between hydrogen and oxygen.

Steam reforming is one example of the reforming reaction. In order to perform steam reforming, the temperature of the reformer needs to be kept high (e.g., 700°C). To this end, the fuel cell system is equipped with a combustor for heating the reformer. In an exhaust passage for combustion exhaust gas generated in the combustor, a carbon monoxide sensor (CO sensor) for detecting the carbon monoxide concentration (CO concentration) in the combustion exhaust gas is provided.

Patent Literature 1 discloses a technique that enables testing of the sensitivity of a CO sensor without supplying carbon monoxide to an exhaust passage from the outside of a fuel cell system. Specifically, the air ratio in a combustor is increased intentionally so as to increase the CO concentration in combustion exhaust gas. The sensitivity of the CO sensor can be tested by comparing the detection value from the CO sensor at this time with a threshold value. The soundness of the CO sensor can be determined by testing the sensitivity of the CO sensor.

### CITATION LIST

### Patent Literature

[Patent Literature 1] JP 5581466 B1

### SUMMARY OF INVENTION

### Technical Problem

According to Patent Literature 1, the air ratio in the combustor needs to be increased intentionally so as to increase the CO concentration in the combustion exhaust gas. In order to test the sensitivity of the CO sensor in a power generation period such as a steady-state operation period, it is necessary to make further modification and improvement.

It is an object of the present disclosure to provide a technique that enables testing of the sensitivity of a CO sensor even in a power generation period of a fuel cell.

### Solution to Problem

That is, the present disclosure provides a fuel cell system including:
a fuel cell configured to generate electric power using hydrogen gas and an oxidant gas;
a reformer configured to generate the hydrogen gas;
a combustor configured to heat the reformer;
an exhaust passage for combustion exhaust gas generated in the combustor; a CO sensor disposed in the exhaust passage; and
a controller configured to monitor a combustion state in the combustor based on a detection value from the CO sensor, wherein
in a power generation period of the fuel cell, the controller executes, while executing a first process for testing the CO sensor by intentionally increasing a CO concentration in the combustion exhaust gas, a second process for converging a power generation amount of the fuel cell to a target value.

### Advantageous Effects of Invention

According to the technique of the present disclosure, the sensitivity of a CO sensor can be tested even in a power generation period of a fuel cell.

### BRIEF DESCRIPTION OF DRAWINGS

FIG. 1 is a diagram showing a configuration of a fuel cell system according to one embodiment of the present disclosure.
FIG. 2 is a timing chart illustrating an operation cycle of the fuel cell system.
FIG. 3A is a flowchart illustrating process steps executed in a control unit.
FIG. 3B is a flowchart illustrating process steps subsequent to those in FIG. 3A.
FIG. 3C is a flowchart illustrating a second process executed in the control unit.
FIG. 4 is a timing chart illustrating operation patterns of the fuel cell system and timings to test a CO sensor.

### DESCRIPTION OF EMBODIMENTS

### (Findings on which the present disclosure is based)

Patent Literature 1 discloses that the sensitivity of the CO sensor can be tested even during power generation of the fuel cell system (claim 18). However, if the air ratio in the combustor is increased intentionally during the power generation, the balance in the operation of the fuel cell system may be disturbed, and this may lead to problems such as considerable fluctuations in the power generation amount.

A fuel cell system according to a first aspect of the present disclosure is a fuel cell system including:
a fuel cell configured to generate electric power using hydrogen gas and an oxidant gas;
a reformer configured to generate the hydrogen gas;
a combustor configured to heat the reformer; an exhaust passage for combustion exhaust gas generated in the combustor;
a CO sensor disposed in the exhaust passage; and a controller configured to monitor a combustion state in the combustor based on a detection value from the CO sensor, wherein
in a power generation period of the fuel cell, the controller executes, while executing a first process for testing the CO sensor by intentionally increasing a CO concentration in the combustion exhaust gas, a second process for converging a power generation amount of the fuel cell to a target value.

According to the first aspect, the balance in the operation of the fuel cell system is kept, and the fluctuations in the power generation amount are suppressed. Also, it is possible to operate the fuel cell system efficiently while performing tests of the CO sensor. That is, the CO sensor can be tested even in a power generation period of the fuel cell.

In a second aspect of the present disclosure, for example, the power generation period in the fuel cell system according to the first aspect is a power generation period of the fuel cell at a rated output. By testing the CO sensor during the rated power generation period, the balance in the operation of the fuel cell system is kept easily, and fluctuations in the power generation amount are suppressed easily.

In a third aspect of the present disclosure, for example, the controller of the fuel cell system according to the first or second aspect executes the first process after a first specific time has elapsed from a time point at which power generation of the fuel cell is started. With this configuration, since the CO sensor is tested after a lapse of a relatively short time period from the time point at which the power generation of the fuel cell is started, it is unlikely that the operation of the fuel cell system is continued in a state where the CO sensor is defective.

In a fourth aspect of the present disclosure, for example, the controller of the fuel cell system according to the third aspect executes the first process again when the following conditions are satisfied: it has been confirmed that the CO sensor is normal in the first process executed after a lapse of the first specific time; a second specific time has elapsed from a time point at which the previous first process is executed; and the fuel cell continues to generate electric power. With this configuration, the CO sensor can be tested efficiently, and besides, it is possible to find abnormalities of the CO sensor reliably.

In a fifth aspect of the present disclosure, for example, the controller of the fuel cell system according to the third or fourth aspect executes the first process again when the following conditions are satisfied: it has been confirmed that the CO sensor is normal in the first process executed after a lapse of the first specific time; the fuel cell continues to generate electric power after a second specific time has elapsed from a time point at which the previous first process is executed; operation of the fuel cell is stopped at least once before the second specific time has elapsed from the time point at which the previous first process is executed; and the first specific time has elapsed from a time point at which the most recent power generation of the fuel cell is started. According to the fifth aspect, the CO sensor can be tested efficiently, and besides, it is possible to find abnormalities of the CO sensor reliably.

In a sixth aspect of the present disclosure, for example, the controller of the fuel cell system according to any one of the first to fifth aspects increases or decreases an air ratio in the combustor when executing the first process. By increasing or decreasing the air ratio, the CO concentration can be adjusted easily.

In a seventh aspect of the present disclosure, for example, after executing the first process, the controller of the fuel cell system according to any one of the first to sixth decreases the CO concentration by adjusting the air ratio in the combustor so as to return to an air ratio prior to the first process. With this configuration, it is possible to continue the operation of the fuel cell system.

In an eighth aspect of the present disclosure, for example, in the first process, the controller of the fuel cell system according to any one of the first to seventh aspects determines that the CO sensor is normal when the detection value from the CO sensor exceeds a threshold value and determines that there is an abnormality in the CO sensor when the detection value from the CO sensor does not exceed the threshold value. According to the eighth aspect, the presence or absence of abnormalities of the CO sensor can be checked accurately.

In a ninth aspect of the present disclosure, for example, in the first process, the controller of the fuel cell system according to the eighth aspect determines that there is an abnormality in the CO sensor when the detection value from the CO sensor does not exceed the threshold value within a predetermined time period and/or within a predetermined air ratio range. According to the ninth aspect, by testing the CO sensor within a predetermined time period and/or within a predetermined air ratio range, it is possible to check the presence or absence of abnormalities in the CO sensor accurately while keeping the balance in the operation of the fuel cell system.

In a tenth aspect of the present disclosure, for example, when the controller of the fuel cell system according to any one of the first to ninth aspects determines that there is an abnormality in the CO sensor, the controller executes at least one process step selected from the group consisting of a process step of making notification of the presence of the abnormality in the CO sensor to an outside, a process step of stopping operation of the fuel cell, and a process step of prohibiting restart of the fuel cell. According to the tenth aspect, the safety of the fuel cell system can be further improved.

In an eleventh aspect of the present disclosure, for example, the controller of the fuel cell system according to any one of the first to tenth aspects executes, as the second process, a process for compensating for a deviation, caused by the execution of the first process, of the power generation amount from the target value. According to the eleventh aspect, the balance in the operation of the fuel cell system is kept during tests of the CO sensor, and fluctuations in the power generation amount are suppressed. As a result, it is possible to continue the operation of the fuel cell system stably.

A fuel cell system according to a twelfth aspect of the present disclosure is a fuel cell system including:
a fuel cell configured to generate electric power using hydrogen gas and an oxidant gas;
a reformer configured to generate the hydrogen gas;
a combustor configured to heat the reformer; an exhaust passage for combustion exhaust gas generated in the combustor;
a CO sensor disposed in the exhaust passage; and
a controller configured to monitor a combustion state in the combustor based on a detection value from the CO sensor, wherein
the controller executes a first process after a first specific time has elapsed from a time point at which power generation of the fuel cell is started, and executes the first process again when the following conditions are satisfied: it has been confirmed that the CO sensor is normal in the first process executed after a lapse of the first specific time; a second specific time has elapsed from a time point at which the previous first process is executed; and the fuel cell continues to generate electric power, and
the first process is a process for testing the CO sensor by intentionally increasing a CO concentration in the combustion exhaust gas.

According to the twelfth aspect, the CO sensor can be tested efficiently, and besides, it is possible to find abnormalities of the CO sensor reliably.

An embodiment of the present disclosure will be described below with reference to the drawings. The present disclosure is not limited to the following embodiment.

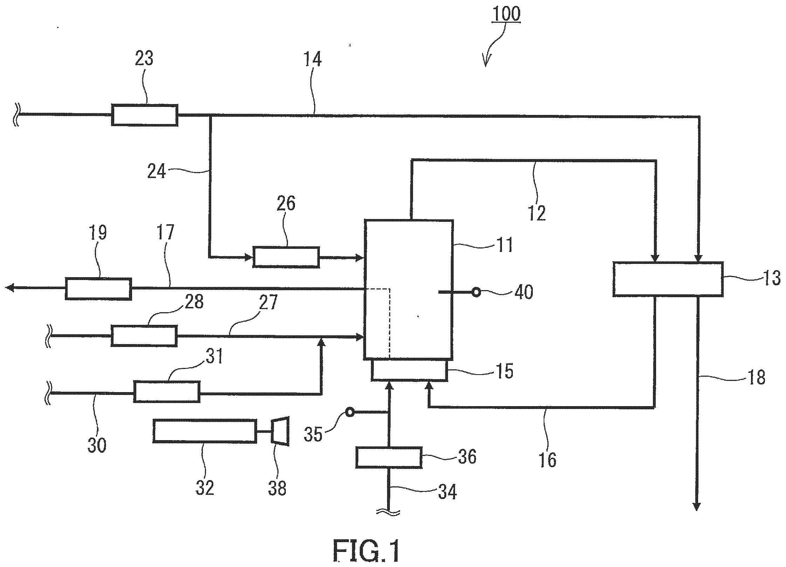

As shown in FIG. 1, a fuel cell system 100 according to one embodiment of the present disclosure includes a reformer 11 and a fuel cell 13. The reformer 11 is a device for generating hydrogen gas through a reforming reaction such as a steam reforming reaction (CH₄ + H₂O → CO + 3H₂), for example. The reformer 11 contains a reforming catalyst for causing the reforming reaction to proceed. The reformer 11 also may contain catalysts for removing carbon monoxide (a CO conversion catalyst and a catalyst for CO preferential oxidation and removal). The reformer 11 generates hydrogen gas using water and a raw material gas. The raw material gas is, for example, hydrocarbon gas such as city gas or liquefied petroleum gas (LP gas). The hydrogen gas generated in the reformer 11 is supplied to the fuel cell 13. The fuel cell 13 generates electric power using an oxidant gas and the hydrogen gas. The fuel cell 13 is, for example, a polymer electrolyte fuel cell or a solid oxide fuel cell. Hot water is produced using exhaust heat from the fuel cell system 100. The thus- produced hot water is stored in a hot water storage tank (not shown).

The fuel cell system 100 further includes a combustor 15, an exhaust passage 17, and a CO sensor 19. The combustor 15 is a device for heating the reformer 11 through combustion of a fuel. The combustor 15 is adjacent to the reformer 11. The combustor 15 may be disposed inside the reformer 11. The exhaust passage 17 (exhaust pipe) is connected to the combustor 15. The exhaust passage 17 is a flow path for combustion exhaust gas generated in the combustor 15. The exhaust passage 17 extends to the outside of a housing of the fuel cell system 100, for example. The CO sensor 19 is disposed in the exhaust passage 17. The CO sensor 19 serves to detect the CO concentration in combustion exhaust gas. The CO sensor 19 is, for example, a catalytic combustion CO sensor or a semiconductor CO sensor.

An air supply passage 34 is connected to the combustor 15. The air supply passage 34 is a flow path for supplying air to the combustor 15. The air supply passage 34 is provided with a flowmeter 35 and an air supply device 36. The flowmeter 35 detects the supply flow rate of air. Examples of the air supply device 36 include fans and blowers. The supply flow rate of air to be supplied to the combustor 15 can be adjusted to a desired value using the flowmeter 35 and the air supply device 36. The flowmeter 35 may be a known flowmeter such as an electromagnetic flowmeter, a Kármán vortex flowmeter, an impeller flowmeter, or an ultrasonic flowmeter.

The fuel cell system 100 further includes a fuel gas supply passage 12, an oxidant gas supply passage 14, an anode off-gas passage 16, and a cathode off-gas passage 18. The fuel gas supply passage 12 is a flow path for supplying hydrogen gas from the reformer 11 to the fuel cell 13. The fuel gas supply passage 12 connects the reformer 11 and the fuel cell 13. The oxidant gas supply passage 14 is a flow path for supplying air, which acts as an oxidant gas, to a cathode of the fuel cell 13. The oxidant gas supply passage 14 is provided with an air supply device 23. The air supply device 23 is a device for supplying air to the fuel cell 13. Examples of the air supply device 23 include fans and blowers. The flow rate of air can be adjusted by controlling the air supply device 23. In the oxidant gas supply passage 14, other devices such as a humidifier and valves may be disposed. The anode off-gas passage 16 is a flow path for discharging unreacted hydrogen gas and unreacted raw material gas from an anode of the fuel cell 13. The anode off-gas passage 16 connects an anode gas outlet of the fuel cell 13 and the combustor 15. The unreacted hydrogen gas and the unreacted raw material gas are supplied to the combustor 15 through the anode off-gas passage 16. The cathode off-gas passage 18 is a flow path for discharging unreacted oxidant gas from the cathode of the fuel cell 13. The cathode off-gas passage 18 is connected to a cathode gas outlet of the fuel cell 13, and extends to the outside of the housing of the fuel cell system 100, for example. The cathode off-gas passage 18 may be connected to the exhaust passage 17 on the upstream side or the downstream side of the CO sensor 19.

The fuel cell system 100 further includes a branch passage 24 and a flowmeter 26. The branch passage 24 is a flow path for supplying air to be used for preferential oxidation to the reformer 11. The branch passage 24 branches off from the oxidant gas supply passage 14 and is connected to the reformer 11. The flowmeter 26 is provided in the branch passage 24. Known flowmeters such as those exemplified above may be used as the flowmeter 26.

The fuel cell system 100 further includes a raw material gas supply passage 27, a raw material supply device 28, a water supply passage 30, and a water supply device 31. The raw material gas supply passage 27 is a flow path for supplying a raw material gas to the reformer 11 from a raw material supply source (not shown) such as a raw material storage tank or a city gas infrastructure. The raw material supply device 28 is provided in the raw material gas supply passage 27. The raw material supply device 28 may be, for example, a pump, a flow regulating valve, or a combination thereof. The supply flow rate of the raw material gas can be adjusted by controlling the raw material supply device 28. In the raw material gas supply passage 27, other devices such as a desulfurizer and valves may be disposed. The water supply passage 30 is a flow path for supplying water to the reformer 11 from a water source such as a water storage tank. The water supply device 31 is provided in the water supply passage 30. The water supply device 31 may be a pump, for example. The supply flow rate of water can be adjusted by controlling the water supply device 31.

The fuel cell system 100 further includes an annunciator 38. The annunciator 38 is used for notification of the occurrence of an abnormality in the CO sensor 19. The annunciator 38 may be a device that can notify the abnormality visually, a device that can notify the abnormality aurally, or a combination thereof. The device that can notify the abnormality visually may be, for example, a display or a warning lamp. The device that can notify the abnormality aurally may be, for example, a speaker or a buzzer. Typically, the annunciator 38 may be an input-output panel that is operable by a user to display a current electrical output (W) of the fuel cell system 100 and to start or stop the operation of the fuel cell system 100. The annunciator 38 can quickly prompt a user or a person in charge of maintenance of the fuel cell system 100 to perform maintenance of the CO sensor 19. With this configuration, the safety and the reliability of the fuel cell system 100 can be improved.

A temperature sensor 40 is attached to the reformer 11. The temperature sensor 40 detects the temperature inside the reformer 11 (the temperature of a catalyst(s) or the outlet temperature of a catalyst layer). A plurality of temperature sensors 40 may be attached to a plurality of positions in the reformer 11, respectively.

The fuel cell system 100 further includes a controller 32. The controller 32 controls control targets such as the fuel cell 13, the air supply device 23, the raw material supply device 28, the water supply device 31, the air supply device 36, the annunciator 38, and various auxiliary devices. The auxiliary devices include valves (including on-off valves, switching valves, and flow regulating valves), pumps, and electric heaters. To the controller 32, detection signals are input from the CO sensor 19, the flowmeter 35, and various sensors. The controller 32 monitors the combustion state in the combustor 15 based on detection values from the CO sensor 19. The controller 32 may be a digital signal processor (DSP) including an analog-to-digital conversion circuit, an input-output circuit, an arithmetic circuit, a storage device, and the like. In the controller 32, a program for properly operating the fuel cell system 100 is stored.

In the fuel cell system 100, each passage may be constituted by one or more pipes.

Next, operation of the fuel cell system 100 will be described.

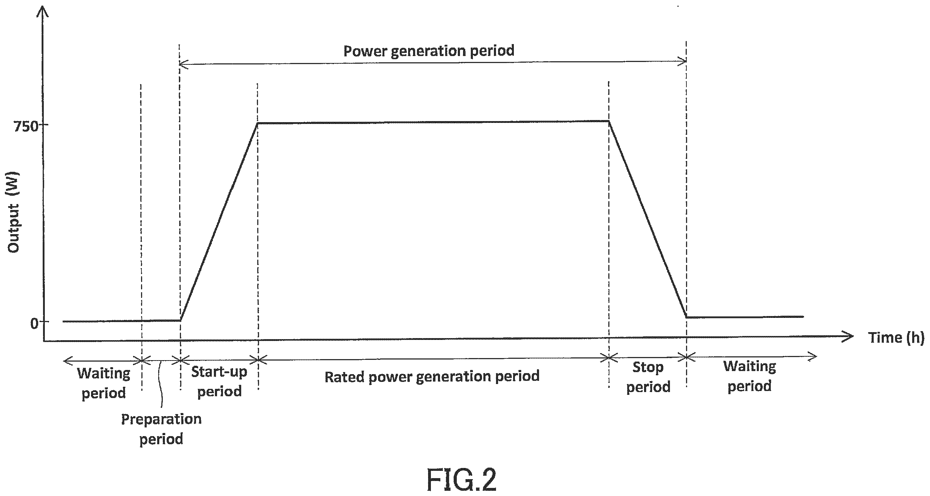

As shown in FIG. 2, the fuel cell system 100 may be operated according to an operation cycle mainly made up of five periods, namely, a preparation period, a start-up period, a rated power generation period, a stop period, and a waiting period. The "preparation period" is an operation period for raising the temperature of the reformer 11 to a predetermined temperature. Specifically, the temperature of the reformer 11 is raised to a predetermined temperature (e.g., 600°C) through combustion of a raw material gas or a hydrogen-containing gas generated by a reforming reaction or by using a heater (not shown). The "start-up period" is an operation period for starting the fuel cell system 100. Specifically, the "start-up period" is an operation period for gradually increasing the output of the fuel cell system 100 to a predetermined rated output (e.g., 750 W). In the start-up period, the supply flow rate of the raw material gas and the supply flow rate of water to the reformer 11 are increased gradually. In the start-up period, the flow rate of an oxidant gas and the flow rate of hydrogen gas increase gradually. The "rated power generation period" is a period during which the fuel cell system 100 is operated at the predetermined rated output. However, in the rated power generation period, it is not essential that the fuel cell system 100 is operated at the rated output at all times. The "rated power generation period" is a period during which the fuel cell system 100 is operated stably at a constant output. In the rated power generation period, the supply flow rate of the raw material gas and the supply flow rate of water to the reformer 11 are each kept approximately constant. Also, the flow rate of the oxidant gas and the flow rate of the hydrogen gas are each kept approximately constant. The "stop period" is an operation period for stopping the fuel cell system 100. Specifically, the "stop period" is an operation period for gradually decreasing the output of the fuel cell system 100 to zero. In the stop period, the supply flow rate of the raw material gas and the supply flow rate of the water to the reformer 11 are decreased gradually. In the stop period, the flow rate of the oxidant gas and the flow rate of the hydrogen gas decrease gradually. The "waiting period" is a period during which the output of the fuel cell system 100 is still kept at zero. In the waiting period, the supply flow rate of the raw material gas and the supply flow rate of water to the reformer 11 are basically zero. However, in order to inhibit the degradation of the reformer 11, the reformer 11 may be purged with the raw material gas at regular time intervals. In the waiting period, the hydrogen gas generation in the reformer 11 is stopped, and the flow rate of the oxidant gas and the flow rate of the hydrogen gas are also basically zero. During the waiting period, the controller 32 continues to execute a predetermined electrical process. Such an electrical process is, for example, a process for monitoring the amount of hot water in the hot water storage tank.

According to the example shown in FIG. 2, in the start-up period and the stop period, the output of the fuel cell system 100 increases or decreases continuously and at a constant rate. However, the output of the fuel cell system 100 may be increased or decreased stepwise. Furthermore, the rate at which the output is increased or decreased may be changed.

In one example, the length of the start-up period and the length of the stop period are each in the range from 10 minutes to 90 minutes. By spending a sufficient time to start or stop the fuel cell system 100, degradation of the reformer 11, degradation of the fuel cell 13, and the like can be inhibited. However, in case of emergency such as when a sudden rise in the CO concentration in combustion exhaust gas is detected, the fuel cell system 100 may be stopped instantaneously.

During the start-up period, the rated power generation period, and the stop period, the fuel cell 13 generates electric power, and the output therefrom is greater than zero. In the present specification, these periods are collectively referred to as a "power generation period".

The length of the power generation period and the length of the waiting period vary according to the time for which the fuel cell system 100 can be operated continuously, the capacity of the hot water storage tank, and the like. When a sufficient amount of hot water is accumulated in the hot water storage tank, the fuel cell system 100 automatically stops the operation and enters the waiting period. When the amount of the hot water in the hot water storage tank becomes less than a threshold value, the fuel cell system 100 automatically starts the operation. When a large amount of hot water is used, there may be no waiting period in one operation cycle. The fuel cell system 100 may be operated according to a predetermined power generation plan.

In the present embodiment, the rated power generation period is a steady-state operation period of the fuel cell system 100. In contrast, a non-steady-state operation period of the fuel cell system 100 includes the preparation period, the start-up period, the stop period, and the waiting period.

In the present embodiment, a maximum amount of time for which continuous operation of the fuel cell system 100 is possible is longer than 24 hours. In one example, the maximum amount of time for which the continuous operation is possible is longer than 24 hours and not longer than 240 hours. When the maximum amount of time for which the continuous operation is possible is sufficiently long, the preparation period, the start-up period, and the stop period become relatively short. Accordingly, improvement in the efficiency of the fuel cell system 100 can be expected. Moreover, degradation of the components such as the reformer 11 and the fuel cell 13 also can be inhibited.

When an instruction to start the fuel cell system 100 is input, the controller 32 controls the various auxiliary devices such as the raw material gas supply device 28. This period corresponds to the preparation period shown in FIG. 2. The instruction to start the fuel cell system 100 is input to the controller 32 when, for example, an operation start switch is turned on. When the temperature of the reformer 11 reaches a predetermined temperature and a predetermined amount of hydrogen is generated, the fuel cell system 100 then shifts to the startup period. The controller 32 controls the air supply device 23, the raw material gas supply device 28, the various auxiliary devices, and the like such that the output of the fuel cell system 100 increases gradually. This period corresponds to the start-up period shown in FIG. 2. When the output of the fuel cell system 100 reaches the rated output, the controller 32 controls the air supply device 23, the raw material gas supply device 28, the various auxiliary devices, and the like such that the rated output is maintained. This period corresponds to the rated power generation period shown in FIG. 2. In the rated power generation period, the air supply device 36 is controlled such that the air ratio becomes 1.6, for example. The term "air ratio" means the ratio (M2/M1) of an actual air flow rate M2 to a theoretical air flow rate M1 required to achieve complete combustion of a fuel. At this time, the concentration (volume concentration) of CO in combustion exhaust gas is 50 ppm or less, for example. When an instruction to stop the fuel cell system 100 is input, the controller 32 controls the air supply device 23, the raw material gas supply device 28, the air supply device 36, the various auxiliary devices, and the like such that the output of the fuel cell system 100 decreases gradually. This period corresponds to the stop period shown in FIG. 2. The instruction to stop the fuel cell system 100 is input to the controller 32 when, for example, an operation stop switch is turned on.

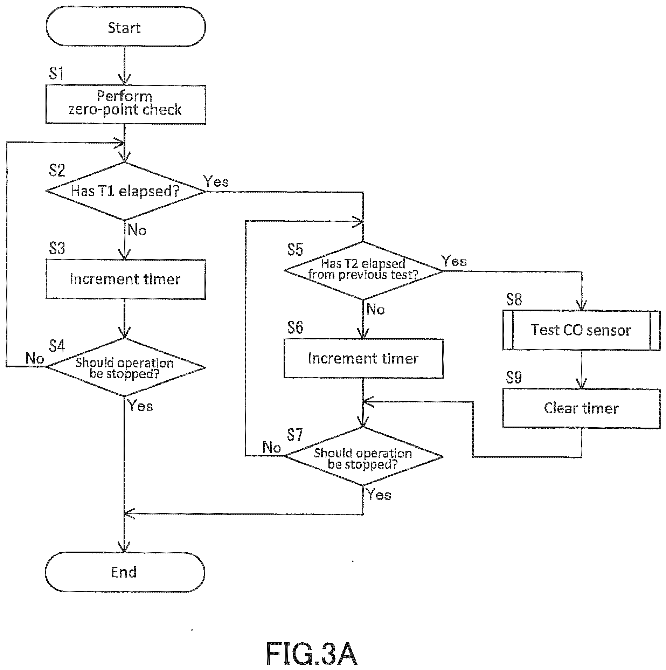

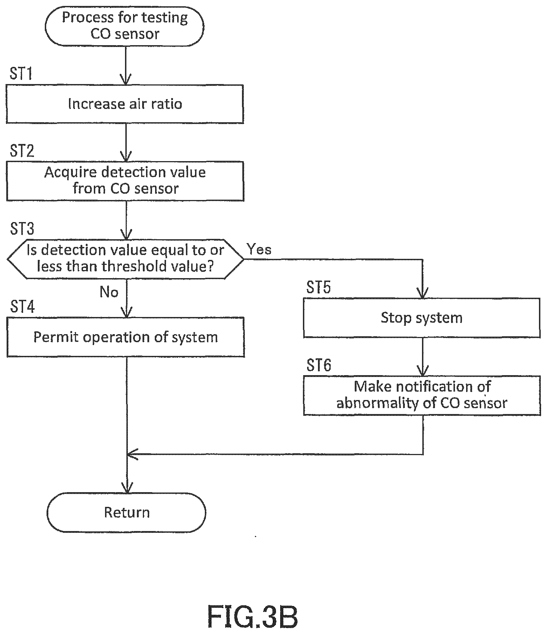

When the instruction to start the fuel cell system 100 is input, the controller 32 tests the CO sensor according to the flowcharts of FIGS. 3A and 3B.

As shown in FIG. 3A, in Step S1, a zero-point check of the CO sensor 19 is made. Specifically, a process step of shifting an output value of the CO sensor 19 toward plus or minus is performed. Next, in Step S2, whether a first specific time T1 has elapsed from a time point at which power generation of the fuel cell 13 is started is determined. The "time point at which power generation is started" means a time point at which the fuel cell 13 actually starts the power generation, and corresponds to a time point at which the "start-up period" shown in FIG. 2 is started. The "first specific time T1" is, for example, a time that is longer than the time required for allowing the output (W) of the fuel cell 13 to reach the rated output. The "first specific time T1" is set within the range from 0.5 to 1.5 hours, for example. By setting the first specific time T1 in such a range, the fuel cell system 100 can be prevented from being operated for a long time using the defective CO sensor 19.

It is to be noted that the "first specific time" may be shorter than the time required for allowing the output of the fuel cell 13 to reach the rated output. In this case, testing of the CO sensor 19 to be described below may be performed in the "start-up period" shown in FIG. 2.

If the first specific time T1 has elapsed from the time point at which the power generation of the fuel cell 13 is started, in Step S5, whether a second specific time T2 has elapsed from a time point at which a previous test of the CO sensor 19 is executed is determined. If the second specific time T2 has not elapsed from the time point at which the previous test is executed, in Step S6, a timer for measuring the time elapsed from the previous test is incremented. In other words, the measurement of the time elapsed from the previous test is continued. If the second specific time T2 has elapsed from the previous test, in Step S8, a test of the CO sensor 19 is executed. The "second specific time T2" is set within the range from 22 to 24 hours, for example.

Specifically, as the test of the CO sensor 19, respective process steps shown in FIG. 3B are executed.

First, in Step ST1, the air ratio in the combustor 15 is increased by controlling the air supply device 36 such that the CO concentration in combustion exhaust gas increases. By controlling the air supply device 36 so as to increase the air ratio, the CO concentration in the combustion exhaust gas increases as compared with the case where the air ratio is 1.6. In Step ST1, the air ratio (M2/M1) is adjusted to fall within the range from 2 to 5, for example. At this time, the concentration (volume concentration) of CO in the combustion exhaust gas reaches 50 ppm to 6000 ppm, for example.

It is also possible to increase the CO concentration in the combustion exhaust gas by decreasing the air ratio. For example, the air supply device 36 is controlled such that the air ratio becomes 1.1 or less. The CO concentration can be adjusted easily by increasing or decreasing the air ratio.

Next, in Step ST2, the controller 32 acquires a detection value from the CO sensor 19. The detection value corresponds to the CO concentration detected by the CO sensor 19. In Step ST3, whether the acquired detection value is equal to or less than the threshold value is determined. The threshold value (threshold concentration) is set within the range from 50 ppm to 200 ppm, for example. When the detection value from the CO sensor 19 is not equal to or less than the threshold value, i.e., when the detection value exceeds the threshold value, it means that the generation of carbon monoxide is detected correctly, and accordingly, the CO sensor 19 is normal. If no abnormality is found in the CO sensor 19, the operation of the fuel cell system 100 is permitted (Step ST4). That is, the raw material gas is continued to be supplied to the reformer 11, and the operation of the fuel cell system 100 is continued.

On the other hand, when the detection value from the CO sensor 19 is equal to or less than the threshold value, it is determined that there is some abnormality in the CO sensor 19. That is, the controller 32 determines that the CO sensor 19 is normal when the detection value from the CO sensor 19 exceeds the threshold value, and determines that there is some abnormality in the CO sensor 19 when the detection value from the CO sensor 19 does not exceed the threshold value. According to this method, the presence or absence of abnormalities in the CO sensor 19 can be checked accurately.

In particular, the controller 32 determines that there is some abnormality in the CO sensor 19 when the detected value of the CO sensor 19 does not exceed the threshold value within a predetermined time period and/or within a predetermined air ratio range. With this configuration, the presence or absence of abnormalities in the CO sensor 19 can be checked accurately. The "predetermined time period" is a time period during which the air ratio is to be increased and that is long enough for the CO sensor 19 to achieve CO detection. The "predetermined time period" may be set long enough to allow stable operation of the fuel cell system 100 to be maintained. The "predetermined time period" is set in the range from 30 seconds to 3 minutes, for example. When the length of the "predetermined time period" is set to an appropriate length, it is possible not only to prevent or reduce the occurrence of abrupt change in operating state of the fuel cell system 100 but also to avoid long-time continuation of a non-steady-state operation of the fuel cell system 100. The "predetermined air ratio" may be set in the range from 2 to 5, as described above. The air ratio may be increased gradually until the detection value from the CO sensor 19 exceeds the threshold value.

If there is any abnormality in the CO sensor 19, the fuel cell system 100 is stopped in Step ST5. Specifically, the output of the fuel cell system 100 may be decreased gradually as in the stop period shown in FIG. 2, or the fuel cell system 100 may be stopped immediately. In Step ST6, the controller 32 executes a process step of notifying the abnormality of the CO sensor 19 using the annunciator 38. The abnormality of the CO sensor 19 may be caused by a failure of the sensor itself, or may be caused by other factors such as the adhesion of a foreign body. After the completion of the test, the air ratio is decreased to its original value. That is, the air ratio of the combustor 15 is adjusted so as to return to 1.6 to decrease the CO concentration. This allows the operation of the fuel cell system 100 to be continued.

If there is any abnormality in the CO sensor 19, at least one process step selected from the group consisting of a process step of making notification of the presence of the abnormality in the CO sensor 19 to an outside, a process step of stopping the operation of the fuel cell 13, and a process step of prohibiting restart of the fuel cell 13 may be executed. This allows the safety of the fuel cell system 100 to be further improved.

If the CO concentration in the combustion exhaust gas is increased intentionally in order to test the CO sensor 19 during the power generation period of the fuel cell 13, the balance in the operation of the fuel cell system may be disturbed, and this may lead to problems such as fluctuations in the power generation amount. In the present embodiment, a second process for converging the power generation amount of the fuel cell 13 to a target value is executed while executing the first process for testing the CO sensor 19. With this configuration, the balance in the operation of the fuel cell system 100 is kept, and the fluctuations in the power generation amount are suppressed. According to the present embodiment, it is possible to operate the fuel cell system 100 efficiently while performing tests of the CO sensor 19. That is, the CO sensor 19 can be tested even in the power generation period of the fuel cell 13.

As the second process, a process for compensating for the deviation, caused by testing the CO sensor 19, of the power generation amount from the target value is executed. By executing such a process, the balance in the operation of the fuel cell system 100 is kept during tests of the CO sensor 19, and fluctuations in the power generation amount are suppressed.

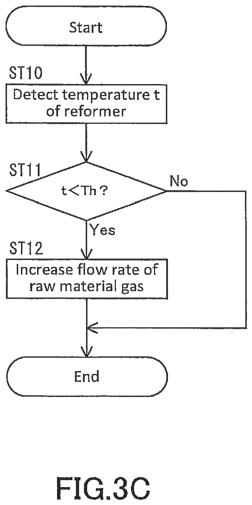

When the air ratio is increased in order to test the CO sensor 19, the reformer 11 is cooled strongly. If the reformer 11 is cooled too much, the progress of a catalytic reaction may be hindered to decrease the amount of hydrogen to be generated, which may hinder stable power generation. In order to make the power generation amount coincide with the target value, the controller 32 executes a process shown in FIG. 3C as the second process, for example. The process shown in FIG. 3C may be executed at regular time intervals in parallel with the first process for testing the CO sensor 19 (FIGS. 3A and 3B).

As shown in FIG. 3C, in Step ST10, the temperature t of the reformer 11 is detected by acquiring a detection value from the temperature sensor 40. In Step ST11, whether the detected temperature t is lower than a predetermined threshold temperature Th is determined. If the detected temperature t is lower than the predetermined threshold temperature Th, in Step ST12, the flow rate of the raw material gas is increased by controlling the raw material gas supply device 28. As a result, the amount of heat imparted to the reformer 11 from the combustor 15 is increased to keep the temperature of the reformer 11 constant. The catalytic reaction thus proceeds smoothly, and the power generation amount converges to the target value.

When the air ratio is increased, pressure loss in the passages such as the anode off-gas passage 16 and the exhaust passage 17 also increases. This results in fluctuations in the flow rate of the raw material gas, fluctuations in the flow rate of reforming water, fluctuations in the flow rate of air for preferential oxidation, and fluctuations in the flow rate of air supplied to the cathode of the fuel cell 13. The controller 32 may execute a process step of keeping these flow rates constant. Specifically, the control input of at least one supply device selected from the air supply device 23, the raw material supply device 28, and the water supply device 31 is increased in accordance with an increase in the air ratio. Alternatively, the followability of each of the supply devices may be enhanced in accordance with the change in air ratio. By performing such control, the balance in the operation of the fuel cell system 100 is kept, and the fluctuations in the power generation amount are suppressed. The power generation amount converges to the target value. According to the present embodiment, it is possible to operate the fuel cell system 100 efficiently while performing tests of the CO sensor 19.

The above-described control may be feedback control (FIG. 3C) or feed forward control.

As shown in FIG. 3A, after the completion of the test of the CO sensor 19, the timer for measuring the time elapsed from the previous test is cleared in Step S9. In Step S7, whether the operation of the fuel cell system 100 should be continued is determined. When an instruction to stop the operation of the fuel cell system 100 is input, the process shown in FIG. 3A is terminated. In the case where the operation of the fuel cell system 100 should be continued, the process steps of Steps S5 and S6 are executed to continue the measurement of the time elapsed from the previous test.

On the other hand, if the first specific time T1 has not elapsed in Step S2, a timer for measuring the time elapsed from the time point at which the power generation of the fuel cell 13 is started is incremented in Step S3. That is, the process steps of Steps S2 and S3 are executed to continue the measurement of the time elapsed from the time point at which the power generation is started. In Step S4, whether the operation of the fuel cell system 100 should be continued is determined. When an instruction to stop the operation of the fuel cell system 100 is input, the process shown in FIG. 3A is terminated.

The timer for measuring the time elapsed from the time point at which the power generation of the fuel cell 13 is started and the timer for measuring the time elapsed from the previous test are, for example, timers provided in the controller 32. Typically, the timers are software timers.

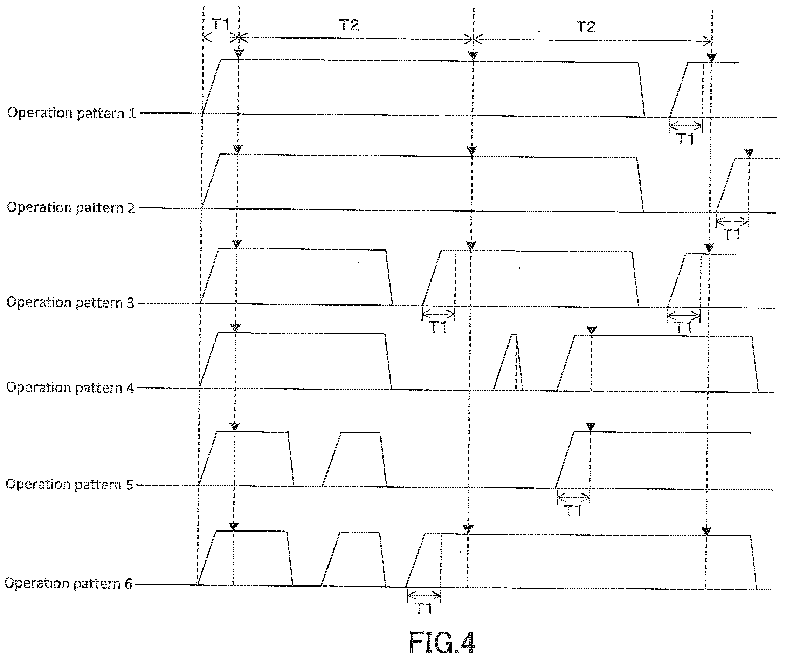

Next, several operation patterns of the fuel cell system 100 and timings to execute tests of the CO sensor will be described with reference to FIG. 4. In FIG. 4, the horizontal axis indicates the elapsed time, and the vertical axis indicates the output power of the fuel cell system 100. Each triangle indicates the timing to execute a test of the CO sensor. A flat portion in each operation pattern shown in FIG. 4 indicates that the fuel cell system 100 is operated at the rated output.

In an operation pattern 1, a test of the CO sensor 19 is executed after the lapse of the first specific time T1 from the time point at which the power generation of the fuel cell 13 is started. With this configuration, since the CO sensor 19 is tested after a lapse of a relatively short time period from the time point at which the power generation of the fuel cell 13 is started, it is unlikely that the operation of the fuel cell system 100 is continued in a state where the CO sensor 19 is defective. That is, according to this embodiment, the safety and the reliability of the fuel cell system 100 can be improved.

In the present embodiment, the first specific time T1 is longer than the start-up period, which has been described with reference to FIG. 2. Accordingly, the test of the CO sensor 19 is performed in the power generation period at the rated output of the fuel cell 13 (rated power generation period). By testing the CO sensor 19 in the rated power generation period, the balance in the operation of the fuel cell system 100 is kept easily, and fluctuations in the power generation amount are suppressed easily.

As shown in the operation pattern 1, the controller 32 tests the CO sensor 19 again when the following conditions are satisfied: it has been confirmed that the CO sensor 19 is normal in the test executed after the lapse of the first specific time T1; the second specific time T2 has elapsed from the time point at which the previous test is executed; and the fuel cell 13 continues to generate electric power. With this configuration, the CO sensor 19 can be tested efficiently, and besides, it is possible to find abnormalities of the CO sensor 19 reliably.

An operation pattern 2 indicates that the fuel cell system 100 is in the waiting period when the second specific time T2 has elapsed from the time point at which the previous test is executed. In the waiting period, since the fuel cell 13 does not continue to generate electric power, the CO sensor 19 is not tested. The CO sensor 19 is tested after the first specific time T1 has elapsed from a time point at which subsequent power generation of the fuel cell 13 is started.

An operation pattern 3 indicates that the waiting period during which the power generation amount is zero may be present between tests. That is, in the operation pattern 3, it has been confirmed that the CO sensor 19 is normal in a test executed after the lapse of the first specific time T1. The fuel cell 13 continues to generate electric power after the second specific time T2 has elapsed from the time point at which the previous test is executed. The operation of the fuel cell 13 is stopped at least once before the second specific time T2 has elapsed from the time point at which the previous test is executed. Furthermore, the first specific time T1 has elapsed from a time point at which the most recent power generation of the fuel cell 13 is started. If these requirements are satisfied, the controller 32 test the CO sensor 19 again. By imposing such conditions, the CO sensor 19 can be tested efficiently, and besides, it is possible to find abnormalities of the CO sensor 19 reliably.

According to operation patterns 4 and 5, it has been confirmed that the CO sensor 19 is normal in the test executed after the lapse of the first specific time T1, and the fuel cell system 100 is in the waiting period after the second specific time T2 has elapsed from the time point at which the previous test is executed. During the waiting period, the CO sensor 19 is not tested. The CO sensor 19 is tested after the first specific time T1 has elapsed from the time point at which subsequent power generation of the fuel cell 13 is started.

According to an operation pattern 6, it has been confirmed that the CO sensor 19 is normal in a test executed after the lapse of the first specific time T1, and thereafter, the operation of the fuel cell 13 is stopped at least once. Even if the operation of the fuel cell 13 is restarted to start power generation and the first specific time T1 has elapsed from the time point at which the power generation is started, the CO sensor 19 is not tested unless the second specific time T2 has elapsed from the time point at which the previous test is executed. The CO sensor 19 is tested again when the following conditions are satisfied: the second specific time T2 has elapsed from the time point at which the previous test is executed of the CO sensor 19 and the fuel cell 13 continues to generate electric power.

### INDUSTRIAL APPLICABILITY

The technique disclosed in the present specification is useful for a fuel cell system.

## Claims

1. A fuel cell system comprising:
a fuel cell configured to generate electric power using hydrogen gas and an oxidant gas;
a reformer configured to generate the hydrogen gas;
a combustor configured to heat the reformer;
an exhaust passage for combustion exhaust gas generated in the combustor;
a CO sensor disposed in the exhaust passage; and
a controller configured to monitor a combustion state in the combustor based on a detection value from the CO sensor, wherein
in a power generation period of the fuel cell, the controller executes, while executing a first process for testing the CO sensor by intentionally increasing a CO concentration in the combustion exhaust gas, a second process for converging a power generation amount of the fuel cell to a target value.

2. The fuel cell system according to claim 1, wherein the power generation period is a power generation period of the fuel cell at a rated output.

3. The fuel cell system according to claim 1 or 2, wherein the controller executes the first process after a first specific time has elapsed from a time point at which power generation of the fuel cell is started.

4. The fuel cell system according to claim 3, wherein the controller executes the first process again when the following conditions are satisfied: it has been confirmed that the CO sensor is normal in the first process executed after a lapse of the first specific time; a second specific time has elapsed from a time point at which the previous first process is executed; and the fuel cell continues to generate electric power.

5. The fuel cell system according to claim 3 or 4, wherein the controller executes the first process again when the following conditions are satisfied: it has been confirmed that the CO sensor is normal in the first process executed after a lapse of the first specific time; the fuel cell continues to generate electric power after a second specific time has elapsed from a time point at which the previous first process is executed; operation of the fuel cell is stopped at least once before the second specific time has elapsed from the time point at which the previous first process is executed; and the first specific time has elapsed from a time point at which the most recent power generation of the fuel cell is started.

6. The fuel cell system according to any one of claims 1 to 5, wherein the controller increases or decreases an air ratio in the combustor when executing the first process.

7. The fuel cell system according to any one of claims 1 to 6, wherein, after executing the first process, the controller decreases the CO concentration by adjusting the air ratio in the combustor so as to return to an air ratio prior to the first process.

8. The fuel cell system according to any one of claims 1 to 7, wherein, in the first process, the controller determines that the CO sensor is normal when the detection value from the CO sensor exceeds a threshold value and determines that there is an abnormality in the CO sensor when the detection value from the CO sensor does not exceed the threshold value.

9. The fuel cell system according to claim 8, wherein, in the first process, the controller determines that there is an abnormality in the CO sensor when the detection value from the CO sensor does not exceed the threshold value within a predetermined time period and/or within a predetermined air ratio range.

10. The fuel cell system according to any one of claims 1 to 9, wherein, when the controller determines that there is an abnormality in the CO sensor, the controller executes at least one process step selected from the group consisting of a process step of making notification of the presence of the abnormality in the CO sensor to an outside, a process step of stopping operation of the fuel cell, and a process step of prohibiting restart of the fuel cell.

11. The fuel cell system according to any one of claims 1 to 10, wherein the controller executes, as the second process, a process for compensating for a deviation, caused by the execution of the first process, of the power generation amount from the target value.
